# EUROPEAN PATENT APPLICATION

(11) **EP 1 522 780 A1**
(43) Date of publication of application: **13.04.2005**
(21) Application number: 04020862.1
(22) Date of filing: 02.09.2004
(51) Int. Cl.: F16L 11/04, B32B 1/08, B32B 27/36, F16L 11/11

(54) **Resin tube**

(30) Priority: 08.09.2003 JP 2003315332
(71) Applicant: NISSAN MOTOR COMPANY, LIMITED, Yokohama-shi, Kanagawa 221-0023 (JP); NITTA MOORE COMPANY, Osaka 556-0022 (JP)
(72) Inventor: Morohoshi, Katsumi, Yokohama-shi Kanagawa 236-0052 (JP); Kumagai, Hiroshi, Yamato-shi Kanagawa 242-0024 (JP); Fujinuma, Yuichi, Ishara-shi Kanagawa 259-1135 (JP); Nishino, Todomu, Nabari-shi Mie 518-0605 (JP); Manai, Ryoji, Nabari-shi Mie 518-0605 (JP)
(74) Representative: Schaeberle, Steffen

(57) **Abstract**

A resin tube has a multilayer resin structure. A first resin layer contains polybutylene naphthalate. Second and third resin layers are layers containing copolymer of polybutylene naphthalate and polytetramethylene glycol. The second resin layer is on an outer side of the first resin layer, ant the third resin layer is on an inner side of the first resin layer. A fourth resin layer contains polybutyene terephthalate.

## Description

### BACKGROUND OF THE INVENTION

### Field of the Invention

The present invention relates to a resin tube and a tube for a fuel pipe system for motor vehicles.

### Description of the Related Art

For pipes for a fuel pipe system of automobiles such as feed tube, return tube, evaporation hose and filler hose, there have been employed metal tube, rubber tube, resin tube and tube of a composite structure of a combination of two or three of metal, rubber and resin. In recent years, in particular, the metal tube is now being replaced by the resin tube which is exempt from rust, light in weight and advantageous in cost.

In general, however, the resin tube is poor in resistance against the permeation of fuel as compared to the metallic tube, and there is requirement for further suppressing the permeation to comply with the regulations on fuel evaporation that will become more stringent in the future.

Various kinds of resin pipes have been developed in an attempt to improve the resistance against the permeation of fuel. However, there has not yet been reported any resin pipe having excellent resistance against the permeation of fuel containing alcohol to offer realistic advantage from the standpoint of materials, production and cost.

In a first example, a composite tube includes a fluorine-contained resin (ethylene/tetrafluoroethylene copolymer) as an inner layer (barrier layer), an adhesive layer as an intermediate layer, and a polyamide 12 as an outer layer (Published Japanese Patent Application *Kokai* No. H05(1993)-164273).

A resin tube of a second example employs a polyphenylene sulfide (PPS) as a barrier layer (Published Japanese Patent Application *Kokai* No. H11 (1999) -156970, and Published Japanese Patent Application *Kokai* No. H10(1998)-230556.

A third example employs a method of adhering a barrier layer (inner layer) and a protection layer (outer layer) together by surface treatment such as plasma (Published Japanese Patent Application *Kokai* No. H10(1998)-30764, and Published Japanese Patent Application *Kokai* No. 2000-55248).

### SUMMARY OF THE INVENTION

However, the first example is unsatisfactory in the following points. (1) The fluoro resin itself is expensive. (2) An expensive adhesive layer is used for adhering the fluoro resin and the polyamide 12. To decrease the wall thickness to reduce the cost is inadequate because the strength withstanding pressure is weakened. On the other hand, in order to improve the adhesion, the fluoro resin is extruded to form the inner layer, and the surfaces thereof are treated by applying a chemically treating solution containing a sodium-ammonia complex to introduce activating groups. In this case, however, the steps of production process become very complex and the cost is further increased.

In the second example, there remain the following problems. (1) An adhesive layer must be provided. (2) The PPS layer and the adhesive layer are expensive. Like the first example, therefore, it is difficult to reduce the cost sufficiently.

These problems stem from the use of the barrier layer (inner layer) and the protection layer (outer layer) of different materials. Namely, when different materials are used in combination, a strong adhesion is not obtained unless an adhesive layer is used. Besides, the adhesive layer itself is expensive, and hence the pipe (laminated layer tube) becomes expensive.

In the third example, the production process is complex and the above problems are not solved. With the combination of the above different kinds of materials, further, it is difficult to reuse the end materials discarded in the production process.

It is therefore an object of the present invention to provide an uncostly resin tube having sufficient resistance against the permeation of fuel such as ordinary gasoline and alcohol-containing fuels.

According to the present invention, a resin tube comprises: a first resin layer containing polybutylene naphthalate; second and third resin layers containing copolymer of polybutylene naphthalate and polytetramethylene glycol, the second resin layer being on an outer side of the first resin layer, and the third resin layer being on an inner side of the first resin layer; and a fourth resin layer containing polybutyene terephthalate.

### BRIEF DESCRIPTION OF THE DRAWINGS

Figs. 1A and 1B are perspective view and sectional view showing a resin tube (having a 5-layer structure) according to one embodiment of the present invention.
Figs. 2A and 2B are perspective view and sectional view showing a resin tube (having a 4-layer structure) according to the embodiment of the present invention.
FIG. 3 is a perspective view showing a resin tube having a convoluted (or corrugated) portion, according to the present invention.

### DESCRIPTION OF THE PREFERRED EMBODIMENTS

The resin tube according to one embodiment of the invention will now be described in detail. In this specification, "%" is all by mass (mass percentage) unless stated otherwise.

As described above, the resin tube according to the embodiment of the present invention has a multi-layer structure including at least first through fourth tubular resin layers. The first resin layer is a shut-off layer (fuel shut-off layer, or barrier layer or center layer) containing PBN. The first resin layer is interposed between the second resin layer on the outer side and the third resin layer on the inner side. The second and third resin layers are layers containing a copolymer of PBN and PTMG. As the fourth resin layer, the resin tube includes one or both of a layer containing PBT and a layer containing a copolymer containing PBT segments.

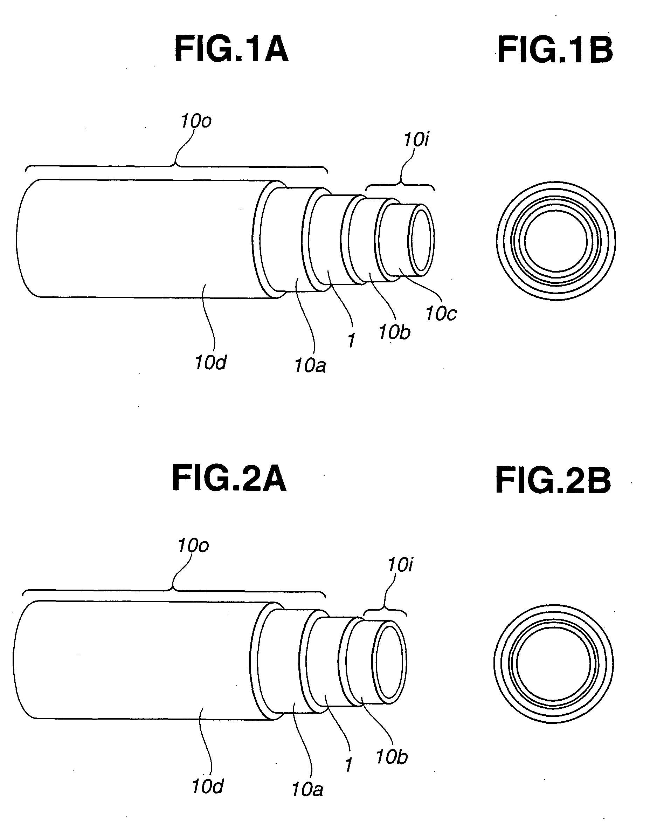

Figs. 1A and 1B show a resin tube having a 5-layer structure according to the embodiment As shown in Figs. 1A and 1B, the resin tube has a hollow center portion in the central portion to permit the flow of fluid such as fuel. The multi layer structure of this resin tube includes a shut-off layer (first resin layer) 1, and inner and outer protection or protective layers 10i and 10o. Outer protective layer 10o includes an outer contact layer (second resin layer) 10a and an outermost layer (fourth or fifth resin layer) 10d. Inner protective layer 10i shown in Figs. 1A and 1B includes an inner contact layer (third resin layer) 10b and an innermost layer (fifth or fourth resin layer) 10c. Outer contact layer 10a is located directly on the outer surface of shut-off layer 1. Inner contact layer 10b is located directly on the inner surface of shut-off layer 1. Shut-off layer 1 is sandwiched between outer and inner contact layers 10a and 10b. Shut-off layer 1 is enclosed contiguously by outer contact layer 10a, and shut-off layer 1 encloses inner contact layer 10b contiguously.

Figs. 2A and 2B show a resin tube having a 4-layer structure according to the embodiment of the present invention. Like the resin tube of Figs. 1A and 1B, the resin tube of Figs. 2A and 2B includes a hollow center portion in the central portion to permit the flow of fuel or the like; shut-off layer (first resin layer) 1, and inner and outer protective layers 10i and 10o. Outer protective layer 10o includes an outer contact layer (second resin layer) 10a and an outermost layer (fourth resin layer) 10d, as in Figs. 1A and 1B. Inner protective layer 10i shown in Figs. 2A and 2B includes only an inner contact layer (third resin layer) 10b, unlike the resin tube of Figs. 1A and 1B. Like the resin tube of Figs. 1A and 1B, outer contact layer 10a is located directly on the outer surface of shut-off layer 1. Inner contact layer 10b is located directly on the inner surface of shut-off layer 1. Shut-off layer 1 is sandwiched contiguously between outer and inner contact layers 10a and 10b.

In each of the 5-layer structure of Figs. 1A and the 4-layer structure of Figs. 2A and 2B, the (fuel) shut-off layer 1 is a layer made of PBN to provide a resin tube having excellent resistance against the permeation of fuel even in the case of a mixed fuel containing alcohol such as ethanol and methanol, as well as ordinary gasoline fuel.

Further, the layers in contact with this shut-off layer 1 containing PBN, i.e., the outer and inner contact layers 10a and 10b are both layers made of a copolymer of PBN and PTMG (hereinafter referred to as PBN elastomer). These PBN elastomer layers 10a and 10b can adhere strongly to the PBN shut-off layer 1. Each of the innermost layer 10c and outermost layer 10d is a layer of inexpensive PBT or a layer of a copolymer containing PBT segments (hereinafter referred to as PBT elastomer). As a result, it is possible to produce resin tubes economically and inexpensively.

The PBN containing layer (1) may be a layer made of PBN, the PBN elastomer containing layer (10a and 10b) may be a layer made of PBN elastomer, the PBT containing layer (10c and/or 10d) may be a layer made of PBT, the PBT elastomer containing layer (10c and/or 10d) may be a layer made of PBT elastomer.

As described above, according to this embodiment, each of the fuel shut-off layer 1 and protective layers 10o and 10i is made of polyester resin. Each layer is made of material selected from the group of polyester resins consisting of PBN, PBT elastomer, PBN elastomer and PBT. Therefore, owing to a high degree of miscibility, discarded resin pieces produced in production process and old resin tubes can be pulverized and melted together without separating the constituent layers, so that the recycling is easy either within the production process or outside the production process. Moreover, the adhesion between any two adjacent layers is firm.

The layer that comes in contact with the fuel is innermost layer 10c (in the case of Figs. 1A and 1B) or inner contact layer 10b (in the case of Figs. 2A and 2B) is made of material selected from the group consisting of the PBN elastomer, PBT elastomer and PBT, exhibiting very excellent resistance against the fuels, such as ethanol-containing gasoline, methanol-containing gasoline, gasoline containing amine-type cleaning agent or deteriorated gasoline and any mixture thereof.

Moreover, the fuel shut-off layer 1 and the protection layers 10o and 10i markedly improve the sealing properties with metals. Therefore, even when a coupling or other metallic part is inserted in this tube, the resin tube is resistant to slippage, unlike the tube of fluoro resin.

As for the resistance against fuels, such as deteriorated gasoline, the PBN is best among the above-mentioned polyester resins, followed by PBT, PBN elastomer and PBT elastomer in this order. Therefore, the innermost layer 10c is desirably the PBT-containing layer, and is next desirably the PBN elastomer-containing layer.

Further, so far as the compatibility is not lost, it is possible to mix the polyamide resins such as polyamide 6 and polyamide 66 as well as the polycarbonate resins such as bisphenol A polycarbonate, into at least one of the fuel shut-off layer 1 and protection layers 10o and 10i. In this case, the cost for the material is further reduced.

In general, furthermore, even the polypropylene or the polyethylene that is less compatible with innermost layer 10c or inner contact layer 10b can be mixed, like the above polyamide resins, by introducing the epoxy groups or by treatment such as modification with maleic acid. In this case, too, the cost of the material can be further reduced.

The resin tube according to the embodiment of the present invention has the flexible layer containing PBN elastomer and further has the layer containing the PBT elastomer depending upon the constitution. When, for example, used for the fuel system piping, therefore, the tube according to the embodiment can be mounted and arranged in a vehicle permitting easy bending. When used for the vehicle, further, the material of the portion on the outermost side of the protection layer 10 is selected from the PBN elastomer, PBT elastomer and PBT. Even when contacted to the fuel, therefore, the resin tube exhibits a sufficient resistance against the fuel.

As an indication for selecting the hardness of the material, it is desired that the elastomers have bending moduli of elasticity smaller than or equal to 1.5 GPa at normal temperature. In the case of a hollow tube with an outside diameter of 8 mm and a wall thickness of about 1 mm, as a concrete example, the bending modulus of elasticity is preferably smaller than or equal to 1.0 GPa at normal temperature. The hardness of the material can be suitably selected depending upon a desired hardness as the resin tube.

As one example of the PBT elastomer used in the embodiment, it is desirable to use a block copolymer containing PBT as a hard segment and PTMG as a soft segment, from the standpoint of availability in the market and softness at low temperatures.

As another example of the PBT elastomer, it is desirable to use a random copolymer containing either one or both of a terephthalic acid and an ester-forming derivative thereof as acid components, containing either one or both of a hydrogenated dimer acid and an ester-forming derivative thereof, and containing 1,4-butane diol as a glycol component, from the standpoint of resistance against the fuels.

The former block copolymer features excellent flexibility at low temperatures among the above properties and can be desirably used for partly or entirely forming protection layers 10o and 10i, and the latter random copolymer exhibits excellent resistance against the fuels such as deteriorated gasoline and can be desirably used for forming innermost layer 10c.

To further improve the above two kinds of PBT elastmers, the copolymer containing the PBT segment may be a copolymerized polyester obtained by copolymerizing, with the PTMG, a copolymerized polyester that contains one or both of the terephthalic acid and the ester-forming derivative thereof as acid components, containing one or both of the hydrogenated dimer (dimeric) acid and the ester-forming derivative thereof, and containing 1,4-butane diol as the glycol component. The thus improved PBT elastomer can be used for any layer in the protection layer 10. The thus improved PBT elastomer exhibits resistance against the fuels inferior to that of the PBT but is comparable to or superior to that of the PBN elastomer.

The PBT elastomer of either the block type or the random type has a melting temperature close to that of PBN in fuel shut-off layer 1. By using the same cross head, therefore, the resin tube can be obtained simultaneously by extrusion.

In the above combination, further, a high adhesion is accomplished among the layers providing excellent adhesion against the input from the outer side, such as heat and fuel.

By using the constitution of a combination of the materials of the same kind as described above, the recycling is easier and, besides, there is no need of separately providing an adhesive layer unlike that of the prior art. Further, since no adhesive layer is required, it is possible to improve other properties such as resistance against the permeation of fuel, resistance against the fuel and flexibility.

The materials constituting the fuel shut-off layer 1 and the protection layers 10o and 10i described above need not be particular materials but may be those which are easily available in the market. As required, further, the heat resistance and hydrolysis resistance can be suitably imparted or filler may be mixed to impart electric conduction, or inorganic materials may be mixed for reinforcement.

In particular, if an electrically conducting filler such as Ketjen Black is mixed into the resin of the innermost layer 10c so that the volume resistivity thereof is in the range of 10² to 10⁶ Ω·cm, it is possible to prevent flow electrification or electrification induced by the flow even when the resin tube is used as a pipe for conveying the fluid at a high speed, such as a feed line of a vehicle.

The resin tube according to the embodiment of the invention has a multi-layer structure including the PBN containing layer (first resin layer)(1), the PBN elastomer containing layers (second and third resin layers)(10a, 10b) and at least one PBT layer which may be the PBT containing layer or the PBT elastomer containing layer. The PBN containing layer (1) is sandwiched between the two PBN elastomer containing layers (10a and 10b). The present invention is not limited to typical structures illustrated in Figs. 1A and 1B and Figs. 2A and 2B, the resin tube of the invention may further include one or more fuel shut-off layers and protection layers to meet the use and requirement, or may have a convoluted or bellows structure as will be described later in detail.

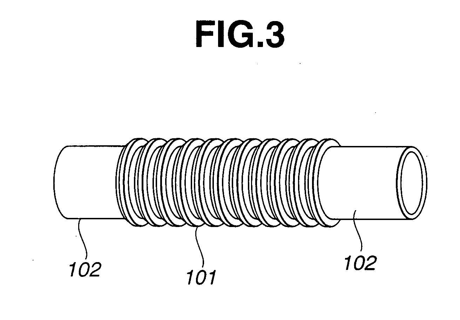

In some cases, it is desirable to provide at least one pleated portion or convoluted (or corrugated) portion shaped like bellows, as shown in FIG. 3. In this case, the pleated portion extends in the longitudinal direction of the resin tube, for example, between two straight plain portions of the resin tube. In the example shown in FIG. 3, a convoluted (or corrugated) portion 101 is formed between two straight portions 102. This makes it possible to impart either one or both of the flexibility which is advantageous at the time of assembling and the sufficient bending property which is advantageous at the time of use. Accordingly, the resin tube can be used as a pipe having a diameter of not smaller than 10 mm, such as a bent hose in the fuel system of the vehicles, finding widespread applications.

As described above, the resin tube according to the embodiment of the invention exhibits excellent resistance against the permeation of fuel, i.e., a high fuel shut-off property not only for gasoline fuels but also alcohol-containing fuels. Therefore, the resin tube is especially suitable for use as fuel pipes for vehicles.

Further, there is no particular limitation on the ratio of layer thicknesses, and the resin tube can be produced at any desired thickness ratio. From the standpoint of securing the resistance against the permeation of fuel, and of maintaining stability at the time when the resin tube is produced by the extrusion-molding, in particular, it is desirable that each layer has a thickness of not smaller than 5% relative to the thickness of the whole layer structure (the wall thickness of the resin tube). From the standpoint of protecting the fuel shut-off layer, further, it is desired that the percentage of thickness of the fuel shut-off layer is 5 to 20% of the thickness of the whole layer structure. For example, in a hollow tube of a five-layer structure as illustrated in Figs. 1A and 1B, having a wall thickness of 1 mm, preferably the innermost layer 10c is 0.2 mm thick, inner contact layer 10b is 0.1 mm thick, fuel shut-off layer 1 is 0.1 mm thick, outer contact layer 10a is 0.1 mm thick, and outermost layer 10d is 0.5 mm thick. In this case, the wall thickness measured in the radial direction is 1 mm (0.2+0.1+0.1+0.1+0.5).

Preferably, the PBN containing shut-off layer 1 is disposed at or near the middle in the total (radial) thickness of the resin tube. That is, the PBN containing layer is located at a position nearly one-half the wall thickness of the resin tube. In the case in which the (radial) wall thickness of the tube is 1 mm, the PBN containing layer is so arranged as to occupy a position of 0.5 mm. The arrangement in which the PBN layer is located at the middle is particularly preferable. That is, preferably, the outer protective layer 10o and the inner protective layer 10i are substantially equal in thickness measured in the radial direction of the tube.

For example, a hollow tube having a wall thickness of 1 mm has a five-layer structure as shown in Figs. 1A and 1B composed of a 0.3 mm thick innermost layer 10c, a 0. 15 mm thick inner contact layer 10b, 0.1 mm thick shut-off layer 1, a 0.1 mm thick outer contact layer 10a, and a 0.35 mm thick outermost layer 10d. This example can further provide excellent impact resistance at low temperatures.

Though the size of the resin tube is selected depending on the kind of the medium that flows therein, the outer diameter of the resin tube is typically in the range of 3 ~ 40 mm, and the wall thickness is generally about 0.5 ~ 3 mm. The wall thickness may be suitably varied according to the need.

### PRACTICAL EXAMPLES

The invention will be described in further detail by way of Practical Examples and Comparative Examples.

### (Practical Example 1)

A resin tube (extruded outside diameter of 8 mm, inside diameter of 6 mm) having a five-layer structure shown in Figs. 1A and 1B was obtained by extruding PBT (700FP manufactured by Polyplastics Co.) as the innermost layer; and PBN elastomer (L4310AN manufactured by Teijin Chemicals Ltd.), PBN (TQB-OT manufactured by Teij in Chemicals Ltd.) and PBN elastomer (L4310AN manufactured by Teijin Chemicals Ltd.) as intermediate layers in this order from the inner side; and PBT elastomer (Hytrel 5577 manufactured by Du Pont-Toray Co., Ltd.) as the outermost layer, at a layer thickness ratio of 0.2:0.1:0.1:0.1:0.5 from the innermost side.

### (Practical Example 2)

A resin tube having the same five-layer structure was obtained in the same manner as in Example 1 but by using the PBT elastomer (Hytrel 7277 manufactured by Du Pont-Toray Co., Ltd.) which is a block copolymer of PBT and PTMG, as the innermost layer.

### (Practical Example 3)

A resin tube having the same five-layer structure was obtained in the same manner as in Example 1 but by using a random copolymer (PBTS 01562 manufactured by Kanebo Gohsen, Ltd.) of terephthalic acid/hydrogenated dimer (or dimeric) acid/1,4-butane diol, as the innermost layer.

### (Practical Example 4)

A resin tube having the same five-layer structure was obtained in the same manner as in Example 1 but by using a copolymer (PBTS 01564 manufactured by Kanebo Gohsen, Ltd.) of a random copolymer of terephthalic acid/hydrogenated dimer acid/1,4-butane diol and PTMG, as the innermost layer.

### (Practical Example 5)

A resin tube having the same five-layer structure was obtained in the same manner as in Example 1 but by using a resin (PBTS 01563 manufactured by Kanebo Gohsen, Ltd.) obtained by kneading 6% of Ketjen Black with a copolymer of PTMG and a random copolymer of terephthalic acid/hydrogenated dimer acid/1,4-butane diol, as the innermost layer.

### (Practical Example 6)

A resin tube having the same five-layer structure was obtained in the same manner as in Practical Example 2 but by selecting the layer thickness ratio to be 0.35:0.1:0.1:0.1:0.35 from the innermost side.

### (Practical Example 7)

A resin tube having the same five-layer structure was obtained in the same manner as in Practical Example 2 and having a convoluted (or corrugated) portion (straight portion having an outside diameter of 16 mm and an inside diameter of 13 mm, and convoulted portion having an outer diameter of 22 mm).

### (Comparative Example 1)

A resin tube (extruded outside diameter of 8 mm, inside diameter of 6 mm) having a three-layer structure was obtained by extruding an ethylene/tetrafluoroethylene copolymer (ETFE) as an inner layer, a mixture of ETFE and a polyamide 12 (PA12) as an intermediate layer, and the PA12 as an outer layer at a ratio of inner layer : intermediate layer : outer layer = 1.5:1.5:7 (layer thickness ratio).

### (Comparative Example 2)

A resin tube (extruded outside diameter of 8 mm, inside diameter of 6 mm) having a mono-layer structure was obtained by using a polyamide 11 (PA 11) only.

Table 1 shows the specifications of the resin tubes of above Practical Example 1 (P.E. 1) to Practical Example 7 (P.E. 7) and Comparative Examples 1 and 2 (C.E. 1 and C.E. 2). In Table 1, the intermediate layer 1 stands for inner contact layer 10b, the intermediate layer 2 stands for fuel shut-off layer 1, and the intermediate layer 3 stands for outer contact layer 10a.

### [Evaluation of Performance]

### (Testing the peeling strength)

Test pieces each having a width of an inch were picked up from the resin tubes of above Examples, and were put to a 180° peeling test stipulated under JIS-K6256. As for Comparative Example 1, measurement was carried out at the interface between the inner layer and the intermediate layer.

### (Testing the resistance against the permeation of fuel)

The materials having the same constitutions as those of the above resin tubes were extruded flat, and the obtained flat plates (having the same layer thickness ratios as the tubes and the total layer thickness of 1 mm) were tested for their resistance against the permeation of fuel. As for the resistance against the permeation of fuel, the samples punched into circular discs of a diameter of 70 mm were measured concerning the amount of fuel that has permeated after the passage of a prescribed period of time (800 hours) in a 60°C atmosphere of gasoline or an alcohol-containing fuel. The gasoline was a regular gasoline (brand name: Silver N produced by Nippon Oil Corporation (Shin-Nihon Sekiyu Co.)) available in the market, and the alcohol-containing fuel was a mixture of 90 parts by volume of the regular gasoline and 10 parts by volume of ethanol.

### (Testing the cold temperature impact resistance)

A pushing rod having a mass of 0.45 kg and an end radius R of 16 mm was permitted to fall on the resin tube from a height of 305 mm in a -40°C atmosphere to measure the cold temperature impact resistance in compliance with the testing method described in JASO M317-1986 Section 8.9.

The obtained results were shown in Table 2 in which a double circle (ⓞ), a single circle (○) and a crisscross (×) represent evaluations relative to the results of Comparative example 1 when the result of Comparative Example 1 was represented by a single circle. Namely, the double circle indicates that the result was superior as compared to Comparative Example 1; the single circle indicates that the result was comparable thereto, and the crisscross indicates that the result was very inferior thereto.

From Table 2, it will be learned that Practical Examples 1 to 7 according to the embodiment of the invention exhibit properties superior to those of Comparative Examples 1 and 2 lying outside the scope of the invention.

At the present moment, further, it is considered that Practical Example 4 brings about the most favorable results from the standpoint of cold temperature impact resistance (in lower temperature region).

Though the invention was described above in detail by way of some Examples, it should be noted that the invention is in no way limited thereto only but can be modified in a variety of ways without departing from the scope of gist of the invention.

For example, the resin materials used in the layers according to the invention may be blended with any one or more of the following substances: an antioxidant and a heat stabilizer (e.g., hindered phenol, hydroquinone, thioether or phosphites and substituents thereof, or any combination thereof); ultraviolet-ray absorber (e.g., resorcinol, salicylate, benzotriazole and benzophenone); lubricant and parting agent (e.g., silicone resin, montanic acid and a salt thereof, stearic acid and a salt thereof, stearyl alcohol and stearylamide), coloring agent containing dye (e.g., nitrosine) and/or pigment (e.g., cadmium sulfide, phthalocyanine), additive-imparting solution (e.g., silicone oil), crystal nucleating agent (e.g., talc, kaolin), which may be added in one kind or in a suitable combination.

The resin tube may typically have a circular shape or an elliptic shape in cross section, or may have any other shape in cross section.

It needs not be pointed out that the resistance against the permeation of fuel is obtained even when the layers of the materials are realized in shapes other than the tube of the multi-layer tubular structure, such as rain water gutters or sheets.

This application is based on a prior Japanese Patent Application No. 2003-315332 filed in Japan on September 8, 2003. The entire contents of this Japanese Patent Applications No. 2003-315332 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

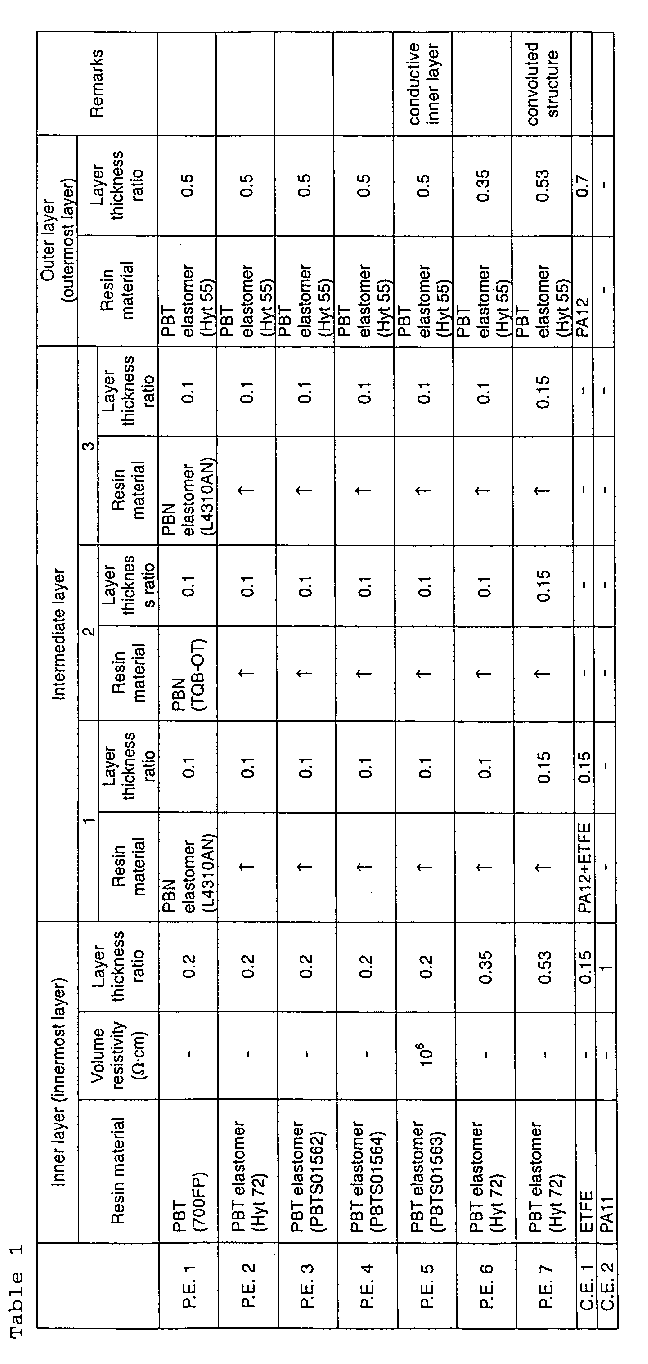

**Table 2**

| Section | Peeling strength | Resistance against permeation | | Cold temperature impact resistance |
|---|---|---|---|---|
| | | Gasoline | Alcohol-containing fuel | |
| P.E. 1 | ⓞ | ⓞ | ⓞ | ○ |
| P.E. 2 | ⓞ | ⓞ | ⓞ | ○ |
| P.E. 3 | ⓞ | ⓞ | ⓞ | ○ |
| P.E. 4 | ⓞ | ⓞ | ⓞ | ○ |
| P.E. 5 | ⓞ | ⓞ | ⓞ | ○ |
| P. E. 6 | ⓞ | ⓞ | ⓞ | ○ |
| P. E. 7 | ⓞ | ⓞ | ⓞ | ○ |
| C.E. 1 | ○ | ○ | ○ | ○ |
| C.E.2 | - | × | × | ○ |

## Claims

1. A resin tube comprising:
a first resin layer(1) containing polybutylene naphthalate;
second and third resin layers (10a, 10b) containing copolymer of polybutylene naphthalate and polytetramethylene glycol, the second resin layer (10a) being on an outer side of the first resin layer, and the third resin layer (10b) being on an inner side of the first resin layer; and
a fourth resin layer (10c, 10d) containing polybutyene terephthalate.

2. The resin tube as claimed in Claim 1, wherein the first through fourth resin layers are tubular layers forming a multilayer tubular resin structure.

3. The resin tube as claimed in Claim 1 or 2, wherein the fourth layer is one of a layer containing polybutylene terephthalate and a layer containing copolymer containing polybutylene terephthalate segment.

4. The resin tube according to one of Claims 1-3, wherein the fourth layer contains a copolymer of polybutylene terephthalate and polytetramethylene glycol.

5. The resin tube according to one of Claims 1-4, wherein the fourth layer is the layer containing copolymer containing polybutylene terephthalate segment, and the fourth layer contains a copolymerized polyester containing an acid component and a glycol component, and wherein the acid component contains at least one of a terephthalic acid, an ester-forming derivative of the terephthalic acid, a hydrogenated dimer acid and an ester-forming derivative of the hydrogenated dimer acid; and the glycol component contains a 1,4-butane diol.

6. The resin tube according to any one of Claims 1-4, wherein the fourth layer is the layer containing copolymer containing polybutylene terephthalate segment, and the fourth layer contains a copolymerized polyester of a polytetramethylene glycol and a compolymerized polyester containing an acid component and a glycol component, and wherein the acid component contains at least one of a terephthalic acid, an ester-forming derivative of the terephthalic acid, a hydrogenated dimer acid and an ester-forming derivative of the hydrogenated dimer acid; and the glycol component contains a 1,4-butane diol.

7. The resin tube according to one of claims 1-6, wherein the first layer (1) is sandwiched tightly between the second and third layers.

8. The resin tube according to one of Claims 1-7, wherein the first layer (1) is sandwiched tightly between an outer protective layer (10o) and an inner protective layer; the outer protective layer (10o) includes the second layer (10a) ; the inner protective layer (10i) includes the third layer (10b) ; and the fourth layer is included in one of the outer and inner protective layers (10o, 10i) .

9. The resin tube according to Claim 8, wherein the fourth layer is an outermost layer (10d) included in the outer protective layer (10o).

10. The resin tube according to Claim 8 or 9, wherein the inner protective layer includes an innermost layer (10c) containing polybutylene terephthalate.

11. The resin tube according to Claim 8 or 9, wherein the third layer (10b) is an innermost layer defining an inside surface of the resin tube.

12. The resin tube according to Claim 8, wherein the outer protective layer (10o) forms an outside surface of the resin tube; the inner protective layer (10i) forms an inside surface of the resin tube; and the thickness of the outer protective layer (10o) is substantially equal to the thickness of the inner protective layer (10i).

13. The resin tube according to one of claims 1-12, wherein a volume resistivity of a resin layer (10c) defining an inside surface of the tubular resin layers is 10² to 10⁶ Ω.cm.

14. The resin tube according to one of claims 1-13, wherein the resin tube includes a convoluted portion.

15. The resin tube according to one of Claims 1-14, wherein the resin tube is a tube for a fuel piping system for a vehicle.
